# EUROPEAN PATENT SPECIFICATION

(11) **EP 3 076 646 B1**
(45) Date of publication and mention of the grant of the patent: **13.05.2020**
(21) Application number: 15193528.5
(22) Date of filing: 06.11.2015
(51) Int. Cl.: H04M 3/493, H04M 3/42

(54) **METHODS AND DEVICES FOR LABELING A NUMBER**
VERFAHREN UND VORRICHTUNGEN ZUR MARKIERUNG EINER ZAHL
PROCÉDÉS ET DISPOSITIFS POUR ÉTIQUETER UN NOMBRE

(30) Priority: 31.03.2015 CN 201510150053
(43) Date of publication of application: 05.10.2016
(73) Proprietor: Xiaomi Inc., Beijing 100085 (CN)
(72) Inventor: WANG, Bin, 100085 Haidian District (CN); QIAO, Zhongliang, 100085 Haidian District (CN); WANG, Shuo, 100085 Haidian District (CN)
(74) Representative: Reeve, Nicholas Edward

(56) References cited:
- CN-A- 104 378 480
- US-A1- 2014 342 707
- US-B1- 8 775 404
- DATABASE WPI Week 201429 Thomson Scientific, London, GB; AN 2014-H14151 XP002754054, -& CN 103 607 498 A (BEIJING QIHOO SCI & TECHNOLOGY CO LTD) 26 February 2014 (2014-02-26)
- DATABASE WPI Week 201061 Thomson Scientific, London, GB; AN 2010-L36681 XP002754055, -& CN 101 808 086 A (WEI X) 18 August 2010 (2010-08-18)

## Description

### TECHNICAL FIELD

The present disclosure generally relates to the field of computer technology, and more particularly, to methods and devices for labeling a number.

### BACKGROUND

Users often receive strange or unfamiliar calls. When an unfamiliar call is a harassing phone call, a user may label the harassing phone call such that he may directly reject the harassing phone call at a next time he receives the harassing phone call.

The related art provides a method for labeling a number, including: after a terminal receives and hangs up a phone call initiated by an unfamiliar number, an identification label input by the user according to the contents of the conversation is acquired, the identification label and the unfamiliar number are sent to a server, and the server stores the corresponding relationship between the unfamiliar number and the identification label and pushes the corresponding relationship to other terminals such that users of other terminals may determine whether to accept calls according to the identification label when they receive calls initiated by the strange or unfamiliar number.

US 2014/0342707 A1 describes web content being formatted to show an icon adjacent to identified phone numbers to enable select-to-call functionality from within a web platform. CN 104378480 A discloses a method for marking a phone number and a system for marking a phone number, in which a matching process is performed in at least one of a local database and a cloud database. CN 103607498 A discloses a method for displaying information relating to strange number. CN 101808086 A discloses a telephone directory adding and storing method.

US 8775404 describes a wireless communication device (WCD) which may receive a communication from an initiating party. The communication may be associated with a communication application, and may include a communication-application identifier that identifies the initiating party. The WCD may check whether a contacts list for the WCD contains user name data associated in the contacts list with the communication-application identifier. Upon determining that the contacts list does not contain such user name data, the WCD may querying a network server (NS) to request user name data associated with the communication-application identifier, receive from the NS a reply containing particular name data associated with the communication-application identifier along with additional communication-application user identifiers, each of which is also associated with the particular name data. The WCD may update the contacts list such that the particular name data is associated with the communication-application identifier along with the received additional communication-application identifiers.

### SUMMARY OF THE INVENTION

In order to overcome the problem that an incorrect identification label input by the user results in inaccurate labeling of the strange or unfamiliar number, the present disclosure provides methods and devices for labeling a number. The invention is defined in the independent claims, to which the reader is now directed. Preferred or advantageous embodiments are set out in the dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for labeling a number according to an exemplary embodiment.
Fig. 2 is a flow chart of a method for labeling a number according to an exemplary embodiment.
Fig. 3 is a flow chart of a method for labeling a number according to an exemplary embodiment.
Fig. 4 is a flow chart of a method for labeling a number according to another exemplary embodiment.
Fig. 5 is a block diagram of a device for labeling a number according to an exemplary embodiment.
Fig. 6 is a block diagram of a device for labeling a number according to an exemplary embodiment.
Fig. 7 is a block diagram of a device for labeling a number according to an exemplary embodiment.
Fig. 8 is a block diagram of a device for labeling a number according to an exemplary embodiment.
Fig. 9 is a block diagram of a device for labeling a number according to an exemplary embodiment.
Fig. 10 is a block diagram of a device for labeling a number according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects of the invention as recited in the appended claims.

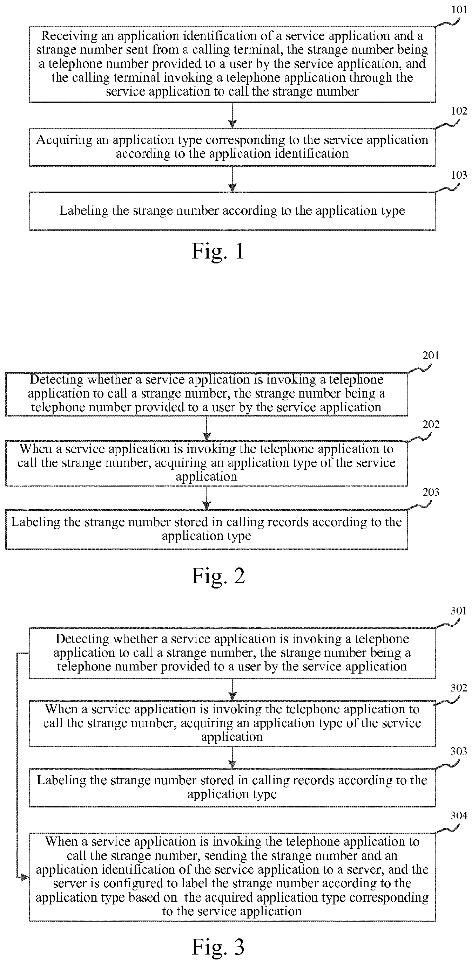

Fig. 1 is a flow chart of a method for labeling a number according to an exemplary embodiment, which is applied in a server. As shown in Fig. 1, the method for labeling a number includes the following steps.

In step 101, an application identification of a service application and an unfamiliar number sent from a calling terminal are received, the unfamiliar number (or strange number) is a telephone number provided to a user by the service application, and the calling terminal invokes a telephone application through the service application to call the unfamiliar number.

In step 102, an application type corresponding to the service application is acquired according to the application identification.

In step 103, the unfamiliar number is labeled according to the application type.

Accordingly, in the method for labeling a number provided by the present disclosure, an application identification of a service application and an unfamiliar number sent from a calling terminal are received, the unfamiliar number is a telephone number provided to a user by the service application, and the calling terminal invokes a telephone application through the service application to call the unfamiliar number; an application type corresponding to the service application is acquired according to the application identification and the unfamiliar number is labeled according to the application type. Thereby, since the unfamiliar number provided by the service application can provide a certain type of service for the user, the unfamiliar number can be labeled according to the application type of the service application. It solves the problem that an incorrect identification label input by the user results in inaccurate labeling of the unfamiliar number, and achieves the effect of improving the accuracy in labeling the unfamiliar number.

Fig. 2 is a flow chart of a method for labeling a number according to an exemplary embodiment, which is applied in a calling terminal. As shown in Fig. 2, the method for labeling a number includes the following steps.

In step 201, it is detected whether a service application is invoking a telephone application to call an unfamiliar number, and the unfamiliar number is a telephone number provided by the service application for a user.

In step 202, when a service application is invoking the telephone application to call the unfamiliar number, an application type of the service application is acquired.

In step 203, the unfamiliar number stored in calling records is labeled according to the application type.

Accordingly, in the method for labeling a number provided by the present disclosure, when a service application is invoking the telephone application to call the unfamiliar number, an application type of the service application is acquired; and the unfamiliar number stored in calling records is labeled according to the application type. Thereby, since the unfamiliar number provided by the service application can provide a certain type of service for the user, the unfamiliar number can be labeled according to the application type of the service application. It solves the problem that an incorrect identification label input by the user results in inaccurate labeling of the unfamiliar number, and achieves the effect of improving the accuracy in labeling the unfamiliar number.

Fig. 3 is a flow chart of a method for labeling a number according to an exemplary embodiment, which is applied in a calling terminal. As shown in Fig. 3, the method for labeling a number includes the following steps.

In step 301, it is detected whether a service application is invoking a telephone application to call an unfamiliar number, and the unfamiliar number is a telephone number provided by the service application for a user.

A telephone application is an application for calling a telephone number, and can be provided by an operating system of the calling terminal.

A service application is an application having a permission to invoke the telephone application. In the present embodiment, the service application can provide an unfamiliar number for a user, and provide a calling button for calling the unfamiliar number to the user. After the user clicks the calling button, the service application invokes the telephone application to call the unfamiliar number. Wherein, the unfamiliar number can be pushed to the service application by a server, or can be set in the service application by a developer, which is not limited by the embodiments of the present disclosure.

In an applicable scenario, the service application is a taxi application which can provide a telephone number of a nearby driver to the user. At this time, the telephone number is an unfamiliar number to the user. The taxi application also provides a calling button for calling the telephone number, and after the user clicks the calling button, the taxi application invokes the telephone application to call the telephone number.

In another applicable scenario, the service application is an express delivery application which can provide the user with a telephone number of a delivery man who is sending the express delivery to the user. At this time, the telephone number is an unfamiliar number to the user. The express delivery application also provides a calling button for calling the telephone number, and after the user clicks the calling button, the express delivery application invokes the telephone application to call the telephone number.

In the present embodiment, the calling terminal can monitor an application programming interface (API) of the telephone application. When it is monitored that a certain service application is invoking the API, it is determined that the service application is invoking the telephone application to call the unfamiliar number.

In step 302, when a service application is invoking the telephone application to call the unfamiliar number, an application type of the service application is acquired.

The calling terminal can directly label the unfamiliar number with the application identification. The application identification may be a serial number, file name, or other data label suitable for identifying the service application. In one example, the application identification may be provided at the calling terminal when the service application is downloaded to and/or installed at the calling terminal. In this case, the application identification may be written by the service application software developers into one or more files that are downloaded with the service application, or the application identification may be provided by a central service application repository such as a service application store. In another example, the application identification may be generated by the calling terminal itself before being sent to the server. In the case, the application identification generated at the calling terminal may comprise the file name of the application. The application identification received at the server from the calling terminal may be compared to a list of application numbers stored at the server, to enable the server to match the application identification to the service application. Since the application identification is not straightforward, the calling terminal can also label the unfamiliar number according to the application name, the application type or other information on the service application. When the unfamiliar number is labeled with the application type, if the application type of the service application has been stored in the calling terminal, the calling terminal can directly read out the application type and label the unfamiliar number stored in the calling records according to the application type; and if the application type of the service application is not stored in the calling terminal, the calling terminal can acquire the application type from the server, and label the unfamiliar number stored in the calling records according to the application type. For example, if the service application is a taxi application, the application type can be taxi; and if the service application is an express delivery application, the application type can be express delivery.

In step 303, the unfamiliar number stored in calling records is labeled according to the application type.

When the unfamiliar number stored in calling records is labeled according to the application type, the calling terminal can directly take the application type as the label of the unfamiliar number, or can also acquire a property label corresponding to the application type and take the property label as the label of the unfamiliar number. The property label indicates a user type of the unfamiliar number. For example, if the service application is a taxi application, the property label may be a driver, and if the service application is an express delivery application, the property label may be a delivery man.

In step 304, when a service application is invoking the telephone application to call the unfamiliar number, the unfamiliar number and an application identification of the service application are sent to a server, the server is configured to label the unfamiliar number according to the application type based on the acquired application type corresponding to the service application.

The calling terminal can learn about which service application is invoking the telephone application, and thus the calling terminal can directly read the application identification of the service application which exclusively identifies one service application. The calling terminal can also acquire the unfamiliar number called by the telephone application, and send the unfamiliar number and the application identification to the server. The server determines the application type of the service application according to the application identification, and labels the unfamiliar number according to the application type.

After the server labels the unfamiliar number according to the application type, in cases where the called terminal corresponding to the unfamiliar number calls another terminal and the unfamiliar number is not included in the calling records of said another terminal, the said another terminal may request the server for the label corresponding to the unfamiliar number, and the server may send the label corresponding to the unfamiliar number to said another terminal, such that the user of said another terminal can determine the user type of the called terminal according to the label, and then determine whether to accept the call.

In the present embodiment, the performing order of steps 302 and 304 is not restricted. That is, step 302 can be performed before step 304, can also be performed after step 304, or can be performed simultaneously with step 304.

Accordingly, in the method for labeling a number provided by the present disclosure, when a service application is invoking the telephone application to call the unfamiliar number, an application type of the service application is acquired; and the unfamiliar number stored in calling records is labeled according to the application type. Thereby, since the unfamiliar number provided by the service application can provide a certain type of service for the user, the unfamiliar number can be labeled according to the application type of the service application. This solves the problem that an incorrect identification label input by the user results in inaccurate labeling of the unfamiliar number, and achieves the effect of improving the accuracy in labeling the unfamiliar number.

Further, by labeling the unfamiliar number stored in the calling records according to the application type, it solves the problem that in cases where more than one unfamiliar number is stored in the calling records, the user cannot distinguish which is the unfamiliar number, and achieves an effect of improving the distinguishability of the unfamiliar number.

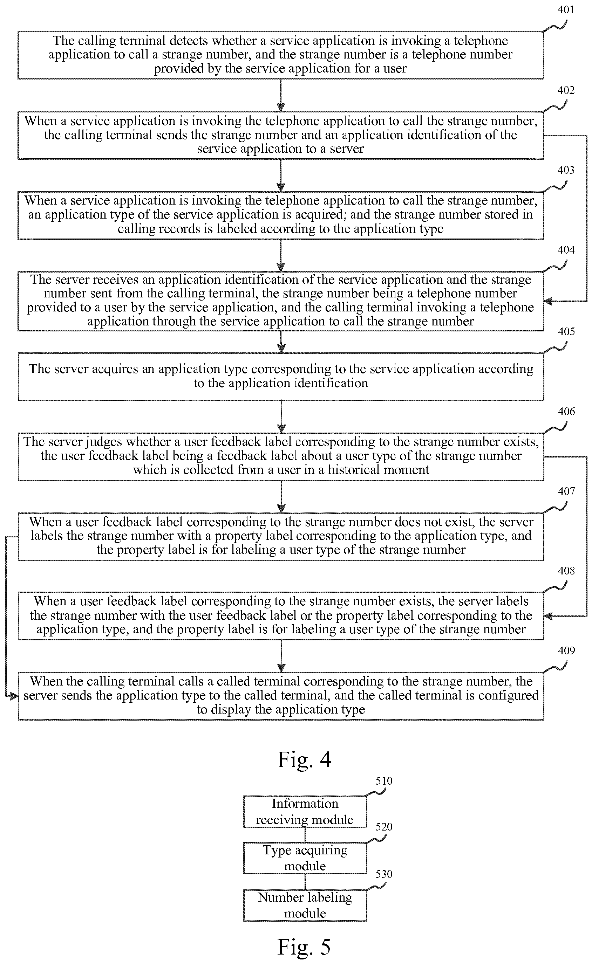

Fig. 4 is a flow chart of a method for labeling a number according to another exemplary embodiment, which is applied in a system including a server and a calling terminal. As shown in Fig. 4, the method for labeling a number includes the following steps.

In step 401, the calling terminal detects whether a service application is invoking a telephone application to call an unfamiliar number, and the unfamiliar number is a telephone number provided by the service application for a user.

A telephone application is an application for calling a telephone number, and can be provided by an operating system of the calling terminal.

A service application is an application having a permission to invoke the telephone application. In the present embodiment, the service application can provide an unfamiliar number for a user, and provide a calling button for calling the unfamiliar number to the user. After the user clicks the calling button, the service application invokes the telephone application to call the unfamiliar number. Wherein, the unfamiliar number can be pushed to the service application by a server, or can be set in the service application by a developer, which is not limited by the embodiments of the present disclosure.

In an applicable scenario, the service application is a taxi application which can provide a telephone number of a nearby driver to the user. At this time, the telephone number is an unfamiliar number to the user. The taxi application also provides a calling button for calling the telephone number, and after the user clicks the calling button, the taxi application invokes the telephone application to call the telephone number.

In another applicable scenario, the service application is an express delivery application which can provide the user with a telephone number of a delivery man who is sending the express delivery to the user. At this time, the telephone number is an unfamiliar number to the user. The express delivery application also provides a calling button for calling the telephone number, and after the user clicks the calling button, the express delivery application invokes the telephone application to call the telephone number.

In the present embodiment, the calling terminal can monitor an API of the telephone application. When it is monitored that a certain service application is invoking the API, it is determined that the service application is invoking the telephone application to call the unfamiliar number.

In step 402, when a service application is invoking the telephone application to call the unfamiliar number, the calling terminal sends the unfamiliar number and an application identification of the service application to a server.

The calling terminal can learn about which service application is invoking the telephone application, and thus the calling terminal can directly read the application identification of the service application which exclusively identifies one service application. The calling terminal can also acquire the unfamiliar number called by the telephone application, and send the unfamiliar number and the application identification to the server.

In step 403, when a service application is invoking the telephone application to call the unfamiliar number, an application type of the service application is acquired; and the unfamiliar number stored in calling records is labeled according to the application type.

After it calls the unfamiliar number, the calling terminal stores the unfamiliar number in the calling records. In case where more than one unfamiliar number is stored in the calling records, the user cannot distinguish which is the unfamiliar number. Since the unfamiliar number provided by the service application can provide a certain type of service for the user, the calling terminal can label the unfamiliar number according to the application type of the service application, it is convenient for the user to manage the unfamiliar numbers stored in the calling records.

The calling terminal can directly label the unfamiliar number with the application identification. Since the application identification is not straightforward, the calling terminal can also label the unfamiliar number according to the application name, the application type or other information on the service application. When the unfamiliar number is labeled with the application type, if the application type of the service application has been stored in the calling terminal, the calling terminal can directly read out the application type and label the unfamiliar number stored in the calling records according to the application type; and if the application type of the service application is not stored in the calling terminal, the calling terminal can acquire the application type from the server, and label the unfamiliar number stored in the calling records according to the application type. For example, if the service application is a taxi application, the application type can be taxi; and if the service application is an express delivery application, the application type can be express delivery.

When the unfamiliar number stored in calling records is labeled according to the application type, the calling terminal can directly take the application type as the label of the unfamiliar number, or can also acquire a property label corresponding to the application type and take the property label as the label of the unfamiliar number. The property label indicates a user type of the unfamiliar number. For example, if the service application is a taxi application, the property label may be a driver, and if the service application is an express delivery application, the property label may be a delivery man.

In the present embodiment, the terminal can only perform step 402, or the terminal can only perform step 403, or the terminal can perform both of step 402 and step 403. At this point, the present embodiment does not limit the performing order of step 402 and step 403. That is, step 402 can be performed before step 403, can also be performed after step 403 or can be performed simultaneously with step 403.

In step 404, the server receives an application identification of the service application and the unfamiliar number sent from the calling terminal, the unfamiliar number being a telephone number provided to a user by the service application, and the calling terminal invoking a telephone application through the service application to call the unfamiliar number.

In step 405, the server acquires an application type corresponding to the service application according to the application identification.

Corresponding relationships between application identifications and application types are pre-stored in the server. The corresponding relationships can be manually collected, or can also be collected in other manners, and the source of the corresponding relationships is not limited in the present embodiment.

In step 406, the server judges whether a user feedback label corresponding to the unfamiliar number exists, the user feedback label being a feedback label about a user type of the unfamiliar number which is collected from a user in a historical moment.

A user feedback label is a feedback label about a user type of the unfamiliar number which is collected from a user in a historical moment. For example, after the user A accepts a call of an unfamiliar number a, it may be determined according to the contents of the conversation that the unfamiliar number a is from a delivery man. At this time, a user feedback label "delivery man" is generated and sent to the server. The server stores the user feedback label "delivery man" as corresponding to the unfamiliar number, sets an accepting number of "delivery man" as 1, and sets a generation time of the user feedback label as the current time. After a time period, a user B also accepts a call from the unfamiliar number a, generates a user feedback label "delivery man" and sends it to the server. The server sets the accepting number of "delivery man" as 2, and updates the generation time of the user feedback label with the current time.

Since the server will label the unfamiliar number according to the application type, when a user feedback label corresponding to the unfamiliar number exists in the server, the server will label the unfamiliar number according to the user feedback label and the application type.

In step 407, when a user feedback label corresponding to the unfamiliar number does not exist, the server labels the unfamiliar number with a property label corresponding to the application type, and the property label is for labeling a user type of the unfamiliar number.

When a user feedback label corresponding to the unfamiliar number does not exist in the server, the server can directly take the application type as the label of the unfamiliar number, or can acquire a property label corresponding to the application type, and take the property label as the label of the unfamiliar number. The property label indicates a user type of the unfamiliar number. For example, if the service application is a taxi application, the property label may be a driver, and if the service application is an express delivery application, the property label may be a delivery man.

In step 408, when a user feedback label corresponding to the unfamiliar number exists, the server labels the unfamiliar number with the user feedback label or the property label corresponding to the application type, and the property label is for labeling a user type of the unfamiliar number.

When a user feedback label corresponding to the unfamiliar number exists in the server, the server can also check the user feedback label. If the user feedback label is accurate, the unfamiliar number can be labeled with the user feedback label or the property label; and if the user feedback label is not accurate, the unfamiliar number can be labeled with the property label, thereby it may ensure that the unfamiliar number is accurately labeled.

Labeling the unfamiliar number with the user feedback label or the property label corresponding to the application type, includes:
1) detecting whether the property label is identical to the user feedback label;
2) when the property label is different from the user feedback label, acquiring a user feedback label received most recently, and detecting whether a time duration between a generation time of the user feedback label and a current time is longer than a predetermined time duration;
3) when the time duration between the generation time and the current time is longer than the predetermined time duration, labeling the unfamiliar number with the property label.

The server can detect whether the property label is identical to the user feedback label. When the property label is identical to the user feedback label, it determines that the user feedback label is accurate, and labels the unfamiliar number with the user feedback label. When the property label is different from the user feedback label, the server can, based on the acquired user feedback label received most recently, calculate a time duration between the generation time of the user feedback label and the current time, and detect whether the time duration is longer than a predetermined time duration. When the time duration is longer than the predetermined time duration, it determines that the user feedback label is invalid, and labels the unfamiliar number with the property label.

In one example, it is assumed that the server received a user feedback label "delivery man" on January 2, 2014, received a user feedback label "delivery man" on February 10, 2014, and acquired a property label "driver" on March 10, 2015, and the predetermined time duration is 12 months. The server calculates the time duration between the generation time of the user feedback label received most recently and the current time is 13 months, which is longer than the predetermined time duration of 12 months, and determines that the user feedback label "delivery man" is not accurate. Then the user feedback label "delivery man" is deleted, and the unfamiliar number is labeled with the property label "driver".

Optionally, the method provided by the present embodiment also includes:
1) when the time duration between the generation time and the current time is shorter than the predetermined time duration, counting a first receiving number of the user feedback label and a second receiving number of the property label within a predetermined time period;
2) when a difference between the second receiving number and the first receiving number is greater than a predetermined threshold, labeling the unfamiliar number with the property label; and
3) when a difference between the second receiving number and the first receiving number is smaller than or equal to the predetermined threshold, labeling the unfamiliar number with the user feedback label.

In one example, it is assumed that the server received a user feedback label "delivery man" on November 10, 2014, and acquired a property label "driver" on March 10, 2015, and the predetermined time duration is 12 months. The server calculates the time duration between the generation time of the user feedback label received most recently and the current time is 4 months, which is shorter than the predetermined time duration of 12 months. Then the server will label the unfamiliar number according to a first receiving number of the user feedback label and a second receiving number of the property label within a predetermined time period.

In one example, it is assumed that the predetermined time period is from September 10, 2014 to March 10, 2015 and the predetermined threshold is 10. The server counts that the first receiving number of the user feedback label "delivery man" is 1, and the second receiving number of the property label "driver" is 12. The calculated difference is 11, which is larger than the predetermined threshold of 10. Thus, it determines that the user feedback label "delivery man" is not accurate. Then, the user feedback label "delivery man" is deleted, and the unfamiliar number is labeled with the property label "driver". If the second receiving number of the property label "driver" is 8, the calculated difference is 7, which is smaller than the predetermined threshold of 10. Then, the server deletes the property label "driver", and labels the unfamiliar number with the user feedback label "delivery man", or the server can prompt an administrator to manually label the unfamiliar number.

In step 409, when the calling terminal calls a called terminal corresponding to the unfamiliar number, the server sends the application type to the called terminal, and the called terminal is configured to display the application type.

In one possible implementation, the calling terminal can send a terminal identification of the called terminal corresponding to the unfamiliar number to the server when it is calling the called terminal. The server determines that the calling terminal is calling the called terminal upon reception of the terminal identification, and determines the called terminal according to the terminal identification.

In another possible implementation, the called terminal corresponding to the unfamiliar number sends a request for inquiring a calling source upon reception of the call from the calling terminal, and the request for inquiring a calling source is for requesting an application type of the service application and includes a first telephone number of the called terminal and a second telephone number of the calling terminal. The server reads the first telephone number of the called terminal and the second telephone number of the calling terminal from the request for inquiring a calling source, detects whether in the current time there is a calling terminal of the second telephone number sending an unfamiliar number and an application identification to the server, and the unfamiliar number is the same as the first telephone number of the called terminal. If in the current time there is a calling terminal of the second telephone number sending an unfamiliar number and an application identification to the server, and the unfamiliar number is the same as the first telephone number of the called terminal, the server acquires an application type corresponding to the application identification and sends the application type to the called terminal. The called terminal can display the application type on the calling interface such that the user of the called terminal can determine the source of the call according to the application type and then determine whether to accept the call.

After the server labels the unfamiliar number according to the application type, if the called terminal corresponding to the unfamiliar number is calling another terminal, and the unfamiliar number is not included in the calling records of said another terminal, the said another terminal may request the server for the label corresponding to the unfamiliar number. The server sends the label corresponding to the unfamiliar number to said another terminal such that the user of said another terminal can determine the user type of said called terminal according to the label and then determine whether to accept the call.

Since the server can acquire the unfamiliar number provided by a service application based on the calling terminal, and label the unfamiliar number according to the application type corresponding to the service application, the server does not need to purchase the unfamiliar number from the provider of the service application, and the cost of labeling the unfamiliar number can be lowered.

Accordingly, in the method for labeling a number provided by the present disclosure, an application identification of a service application and an unfamiliar number sent from a calling terminal are received, the unfamiliar number is a telephone number provided to a user by the service application, and the calling terminal invokes a telephone application through the service application to call the unfamiliar number; an application type corresponding to the service application is acquired according to the application identification and the unfamiliar number is labeled according to the application type. Thereby, since the unfamiliar number provided by the service application can provide a certain type of service for the user, the unfamiliar number can be labeled according to the application type of the service application. This solves the problem that an incorrect identification label input by the user results in inaccurate labeling of the unfamiliar number, and achieves the effect of improving the accuracy in labeling the unfamiliar number.

In addition, a request for inquiring a calling source sent from the called terminal corresponding to the unfamiliar number is received, and the request for inquiring a calling source is a request for an application type of a service application sent by the called terminal upon reception of a call. The application type is sent to a called terminal, such that the source of the call can be provided to the called terminal for the user to judge whether to accept the call.

Further, by labeling the unfamiliar number stored in the calling records according to the application type, it solves the problem that in case where more than one unfamiliar number is stored in the calling records, the user cannot distinguish which is the unfamiliar number, and achieves an effect of improving the distinguishability of the unfamiliar number.

Fig. 5 is a block diagram of a device for labeling a number according to an exemplary embodiment, which is applied in a server. As shown in Fig. 5, the device for labeling a number includes:
an information receiving module 510 configured to receive an application identification of a service application and an unfamiliar number sent from a calling terminal, the unfamiliar number being a telephone number provided to a user by the service application, and the calling terminal invoking a telephone application through the service application to call the unfamiliar number;
a type acquiring module 520 configured to acquire an application type corresponding to the service application according to the application identification received by the information receiving module 510; and
a number labeling module 530 configured to label the unfamiliar number according to the application type acquired by the type acquiring module 520.

Accordingly, in the device for labeling a number provided by the present disclosure, an application identification of a service application and an unfamiliar number sent from a calling terminal are received, the unfamiliar number is a telephone number provided to a user by the service application, and the calling terminal invokes a telephone application through the service application to call the unfamiliar number; an application type corresponding to the service application is acquired according to the application identification and the unfamiliar number is labeled according to the application type. Thereby, since the unfamiliar number provided by the service application can provide a certain type of service for the user, the unfamiliar number can be labeled according to the application type of the service application. It solves the problem that an incorrect identification label input by the user results in inaccurate labeling of the unfamiliar number, and achieves the effect of improving the accuracy in labeling the unfamiliar number.

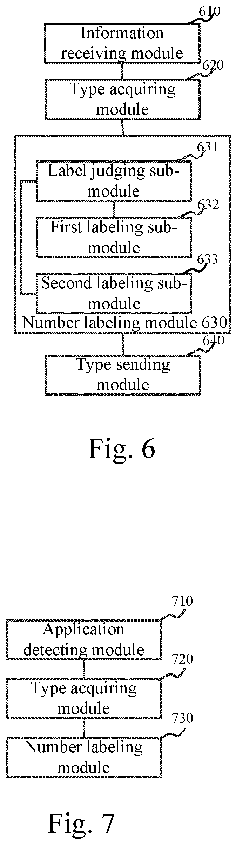

Fig. 6 is a block diagram of a device for labeling a number according to an exemplary embodiment, which is applied in a server. As shown in Fig. 6, the device for labeling a number includes:
an information receiving module 610 configured to receive an application identification of a service application and an unfamiliar number sent from a calling terminal, the unfamiliar number being a telephone number provided to a user by the service application, and the calling terminal invoking a telephone application through the service application to call the unfamiliar number;
a type acquiring module 620 configured to acquire an application type corresponding to the service application according to the application identification received by the information receiving module 610; and
a number labeling module 630 configured to label the unfamiliar number according to the application type acquired by the type acquiring module 620.

Optionally, the number labeling module 630 includes:
a label judging sub-module 631 configured to judge whether a user feedback label corresponding to the unfamiliar number exists, the user feedback label being a feedback label about a user type of the unfamiliar number which is collected from a user in a historical moment;
a first labeling sub-module 632 configured to, when the label judging sub-module 631 judges that a user feedback label corresponding to the unfamiliar number does not exist, label the unfamiliar number with a property label corresponding to the application type; and
a second labeling sub-module 633 configured to, when the label judging sub-module 631 judges that a user feedback label corresponding to the unfamiliar number exists, label the unfamiliar number with the user feedback label or the property label corresponding to the application type;
wherein the property label is for labeling a user type of the unfamiliar number.

Optionally, the second labeling sub-module 633 is further configured to:
detect whether the property label is identical to the user feedback label;
when the property label is different from the user feedback label, acquire a user feedback label received most recently, and detect whether a time duration between a generation time of the user feedback label and a current time is longer than a predetermined time duration;
when the time duration between the generation time and the current time is longer than the predetermined time duration, label the unfamiliar number with the property label.

Optionally, the second labeling sub-module 633 is further configured to:
when the time duration between the generation time and the current time is shorter than the predetermined time duration, count a first receiving number of the user feedback label and a second receiving number of the property label within a predetermined time period;
when a difference between the second receiving number and the first receiving number is greater than a predetermined threshold, label the unfamiliar number with the property label; and
when a difference between the second receiving number and the first receiving number is smaller than or equal to the predetermined threshold, label the unfamiliar number with the user feedback label.

Optionally, the device further includes:
a type sending module 640 configured to, when the calling terminal calls a called terminal corresponding to the unfamiliar number, send the application type to the called terminal, and the called terminal is configured to display the application type.

Accordingly, in the device for labeling a number provided by the present disclosure, an application identification of a service application and an unfamiliar number sent from a calling terminal are received, the unfamiliar number is a telephone number provided to a user by the service application, and the calling terminal invokes a telephone application through the service application to call the unfamiliar number; an application type corresponding to the service application is acquired according to the application identification and the unfamiliar number is labeled according to the application type. Thereby, since the unfamiliar number provided by the service application can provide a certain type of service for the user, the unfamiliar number can be labeled according to the application type of the service application. It solves the problem that an incorrect identification label input by the user results in inaccurate labeling of the unfamiliar number, and achieves the effect of improving the accuracy in labeling the unfamiliar number.

In addition, a request for inquiring a calling source sent from the called terminal corresponding to the unfamiliar number is received, and the request for inquiring a calling source is a request for an application type of a service application sent by the called terminal upon reception of a call. The application type is sent to a called terminal, such that the source of the call can be provided to the called terminal for the user to judge whether to accept the call.

Fig. 7 is a block diagram of a device for labeling a number according to an exemplary embodiment, which is applied in a calling terminal. As shown in Fig. 7, the device for labeling a number includes:
an application detecting module 710 configured to detect whether a service application is invoking a telephone application to call an unfamiliar number, the unfamiliar number being a telephone number provided to a user by the service application;
a type acquiring module 720 configured to, when the application detecting module 710 detects that a service application is invoking the telephone application to call the unfamiliar number, acquire an application type of the service application; and
a number labeling module 730 configured to label the unfamiliar number stored in calling records according to the application type acquired by the type acquiring module 720.

Accordingly, in the device for labeling a number provided by the present disclosure, when a service application is invoking the telephone application to call the unfamiliar number, an application type of the service application is acquired; and the unfamiliar number stored in calling records is labeled according to the application type. Thereby, since the unfamiliar number provided by the service application can provide a certain type of service for the user, the unfamiliar number can be labeled according to the application type of the service application. This solves the problem that an incorrect identification label input by the user results in inaccurate labeling of the unfamiliar number, and achieves the effect of improving the accuracy in labeling the unfamiliar number.

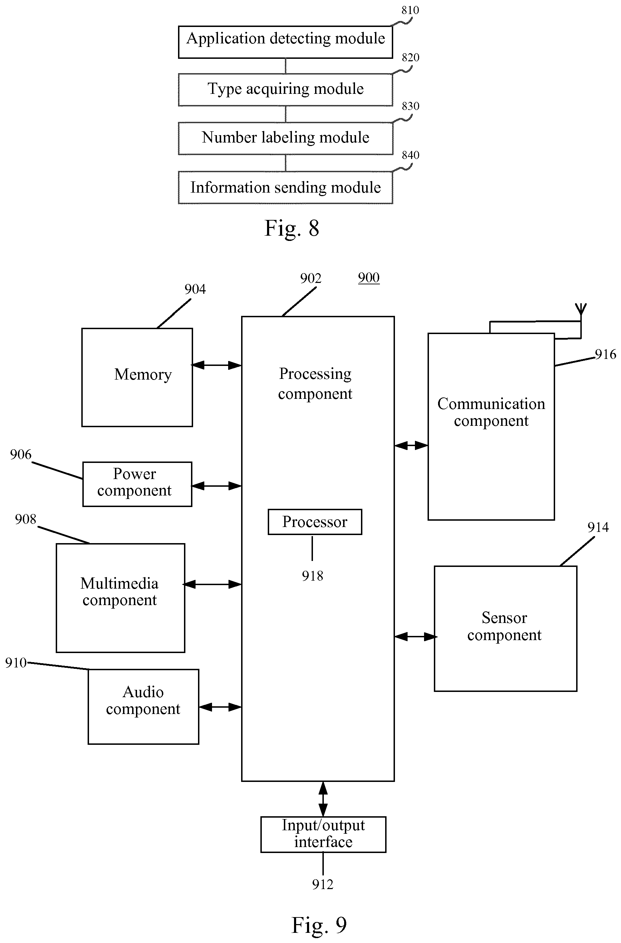

Fig. 8 is a block diagram of a device for labeling a number according to an exemplary embodiment, which is applied in a calling terminal. As shown in Fig. 8, the device for labeling a number includes:
an application detecting module 810 configured to detect whether a service application is invoking a telephone application to call an unfamiliar number, the unfamiliar number being a telephone number provided to a user by the service application;
a type acquiring module 820 configured to, when the application detecting module 810 detects that a service application is invoking the telephone application to call the unfamiliar number, acquire an application type of the service application; and
a number labeling module 830 configured to label the unfamiliar number stored in calling records according to the application type acquired by the type acquiring module 820.

Optionally, the device further includes:
an information sending module 840 configured to, when a service application is invoking the telephone application to call the unfamiliar number, send the unfamiliar number and an application identification of the service application to a server, and the server is configured to label the unfamiliar number according to the application type based on the acquired application type corresponding to the service application.

Accordingly, in the device for labeling a number provided by the present disclosure, when a service application is invoking the telephone application to call the unfamiliar number, an application type of the service application is acquired; and the unfamiliar number stored in calling records is labeled according to the application type. Thereby, since the unfamiliar number provided by the service application can provide a certain type of service for the user, the unfamiliar number can be labeled according to the application type of the service application. It solves the problem that an incorrect identification label input by the user results in inaccurate labeling of the unfamiliar number, and achieves the effect of improving the accuracy in labeling the unfamiliar number.

Further, by labeling the unfamiliar number stored in the calling records according to the application type, it solves the problem that in cases where more than one unfamiliar number is stored in the calling records, the user cannot distinguish which is the unfamiliar number, and achieves an effect of improving the distinguishability of the unfamiliar number.

With respect to the devices in the above embodiments, the specific manners of performing operations for the individual modules therein have been described in detail in the embodiments regarding the methods, and so will not be elaborated herein.

A device for labeling a number is provided by an embodiment of the present disclosure, which can implement the method for labeling a number. The device for labeling a number includes: a processor; and a memory for storing instructions executable by the processor;
wherein the processor is configured to perform the steps of:
receiving an application identification of a service application and an unfamiliar number sent from a calling terminal, the unfamiliar number being a telephone number provided to a user by the service application, and the calling terminal invoking a telephone application through the service application to call the unfamiliar number;
acquiring an application type corresponding to the service application according to the application identification; and
labeling the unfamiliar number according to the application type.

A device for labeling a number is provided by an embodiment of the present disclosure, which can implement the method for labeling a number. The device for labeling a number includes: a processor; and a memory for storing instructions executable by the processor;
wherein the processor is configured to perform the steps of:
detecting whether a service application is invoking a telephone application to call an unfamiliar number, the unfamiliar number being a telephone number provided to a user by the service application;
when a service application is invoking the telephone application to call the unfamiliar number, acquiring an application type of the service application; and
labeling the unfamiliar number stored in calling records according to the application type.

Fig. 9 is a block diagram of a device for labeling a number according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, for example the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 918 in the device 900, for performing the above-described methods. For example, the non-transitory computer-readable storage medium may be a ROM, a RAM, a CD-ROM, a magnetic tape, a floppy disc, an optical data storage device, and the like.

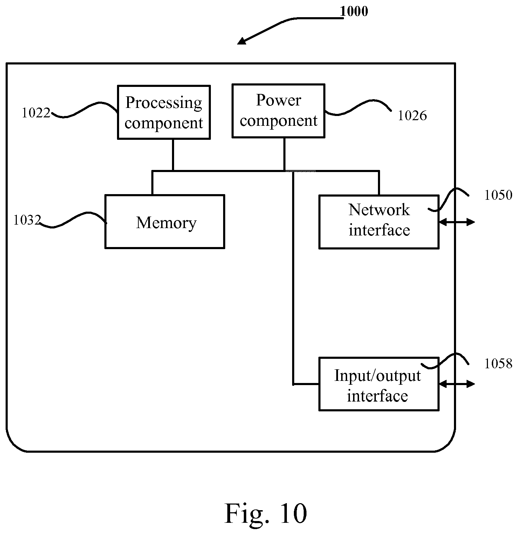

Fig. 10 is a block diagram of a device for labeling a number according to an exemplary embodiment. For example, the device 1000 may be provided as a server. Referring to FIG. 10, the device 1000 includes a processing component 1022 that further includes one or more processors, and memory resources represented by a memory 1032 for storing instructions executable by the processing component 1022, such as application programs. The application programs stored in the memory 1032 may include one or more modules each corresponding to a set of instructions. Further, the processing component 1022 is configured to execute the instructions to perform the above described method for labeling a number.

The device 1000 may also include a power component 1026 configured to perform power management of the device 1000, wired or wireless network interface(s) 1050 configured to connect the device 1000 to a network, and an input/output (I/O) interface 1058. The device 1000 may operate based on an operating system stored in the memory 1032, such as Windows Server (Trade Mark), Mac OS X (Trade Mark), Unix (Trade Mark), Linux (Trade Mark), FreeBSD (Trade Mark), or the like.

Other embodiments of the invention will be apparent to those skilled in the art from consideration of the specification and practice of the invention disclosed here. Although individual modules have been described according to their respective functions, a single module may be used in place of one or more of the modules described. The modules may be implemented in software, hardware, or a combination thereof. This application is intended to cover any variations, uses, or adaptations of the invention following the general principles thereof and including such departures from the present disclosure as come within known or customary practice in the art. It is intended that the specification and examples be considered as exemplary only.

It will be appreciated that the scope of the invention only be limited by the appended claims.

## Claims

1. A method for labeling a number, the method comprising, at a server:
receiving an unfamiliar number sent from a calling terminal, the unfamiliar number being a telephone number provided to a user by a service application, and the calling terminal invoking a telephone application through the service application to call the unfamiliar number;
wherein the method further comprises:
receiving (101) an application identification of the service application;
acquiring (102) an application type corresponding to the service application according to the application identification; and
labeling (103) the unfamiliar number according to the application type;
wherein the application type is indicative of the service provided by the application;
wherein labeling (103) the unfamiliar number according to the application type comprises:
judging (406) whether a user feedback label corresponding to the unfamiliar number exists, the user feedback label being a feedback label about a user type of the unfamiliar number which is collected from a user historically;
when a user feedback label corresponding to the unfamiliar number does not exist, labeling (407) the unfamiliar number with a property label corresponding to the application type; and
when a user feedback label corresponding to the unfamiliar number exists, labeling (408) the unfamiliar number with the user feedback label or the property label corresponding to the application type;
wherein the property label is for labeling a user type of the unfamiliar number;
**characterized in that** labeling the unfamiliar number with the user feedback label or the property label corresponding to the application type comprises:
detecting whether the property label is identical to the user feedback label;
when the property label is different from the user feedback label, acquiring a user feedback label received most recently, and detecting whether a time duration between a generation time of the user feedback label and a current time is longer than a predetermined time duration; and
when the time duration between the generation time and the current time is longer than the predetermined time duration, labeling the unfamiliar number with the property label.

2. The method according to claim 1, further comprising:
when the time duration between the generation time and the current time is shorter than the predetermined time duration, counting a first receiving number of the user feedback label and a second receiving number of the property label within a predetermined time period;
when a difference between the second receiving number and the first receiving number is greater than a predetermined threshold, labeling the unfamiliar number with the property label; and
when a difference between the second receiving number and the first receiving number is smaller than or equal to the predetermined threshold, labeling the unfamiliar number with the user feedback label.

3. The method according to any one of claims 1 or 2, further comprising:
when the calling terminal calls a called terminal corresponding to the unfamiliar number, sending the application type to the called terminal, wherein the called terminal is configured to display the application type.

4. A device for labeling a number, the device comprising:
an information receiving module (510, 610) configured to an unfamiliar number sent from a calling terminal, the unfamiliar number being a telephone number provided to a user by a service application, and the calling terminal invoking a telephone application through the service application to call the unfamiliar number;
wherein the information receiving module (510, 610) is configured to receive an application identification of the service application;
the device further comprising:
a type acquiring module (520, 620) configured to acquire an application type corresponding to the service application according to the application identification received by the information receiving module; and
a number labeling module (530, 630) configured to label the unfamiliar number according to the application type acquired by the type acquiring module;
wherein the application type is indicative of the service provided by the application;
wherein the number labeling module comprises:
a label judging sub-module (631) configured to judge whether a user feedback label corresponding to the unfamiliar number exists, the user feedback label being a feedback label about a user type of the unfamiliar number which is collected from a user historically;
a first labeling sub-module (632) configured to, when the label judging sub-module judges that a user feedback label corresponding to the unfamiliar number does not exist, label the unfamiliar number with a property label corresponding to the application type; and
a second labeling sub-module (633) configured to, when the label judging sub-module judges that a user feedback label corresponding to the unfamiliar number exists, label the unfamiliar number with the user feedback label or the property label corresponding to the application type;
wherein the property label is for labeling a user type of the unfamiliar number; and
**characterized in that** the second labeling sub-module (633) is further configured to:
detect whether the property label is identical to the user feedback label;
when the property label is different from the user feedback label, acquire a user feedback label received most recently, and detect whether a time duration between a generation time of the user feedback label and a current time is longer than a predetermined time duration; and
when the time duration between the generation time and the current time is longer than the predetermined time duration, label the unfamiliar number with the property label.

5. The device according to claim 4, wherein the second labeling sub-module (633) is further configured to:
when the time duration between the generation time and the current time is shorter than the predetermined time duration, count a first receiving number of the user feedback label and a second receiving number of the property label within a predetermined time period;
when a difference between the second receiving number and the first receiving number is greater than a predetermined threshold, label the strange number with the property label; and
when a difference between the second receiving number and the first receiving number is smaller than or equal to the predetermined threshold, label the strange number with the user feedback label.

6. A computer program comprising instructions which, when the program is executed a computer, cause the computer to carry out the method according to any one of claims 1 to 3.

7. A system comprising a server and a terminal, wherein the terminal is configured to send an unfamiliar number to the server and the server is configured to perform the method of any of claims 1 to 3.

## Patentansprüche

1. Verfahren zum Markieren einer Nummer, wobei das Verfahren Folgendes an einem Server aufweist:
Empfangen einer von einem anrufenden Endgerät gesendeten fremden Nummer, wobei die fremde Nummer eine einem Benutzer von einer Dienstanwendung bereitgestellte Telefonnummer ist und das anrufende Endgerät eine Telefonanwendung durch die Dienstanwendung zum Anrufen der fremden Nummer aufruft;
wobei das Verfahren ferner Folgendes aufweist:
Empfangen (101) einer Anwendungsidentifizierung der Dienstanwendung;
Erfassen (102) eines der Dienstanwendung entsprechenden Anwendungstyps gemäß der Anwendungsidentifizierung; und
Markieren (103) der fremden Nummer gemäß dem Anwendungstyp;
wobei der Anwendungstyp für den von der Anwendung bereitgestellten Dienst bezeichnend ist;
wobei das Markieren (103) der fremden Nummer gemäß dem Anwendungstyp Folgendes aufweist:
Urteilen (406), ob es eine der fremden Nummer entsprechende Benutzer-Feedbackmarkierung gibt, wobei die Benutzer-Feedbackmarkierung eine Feedbackmarkierung über einen Benutzertyp der fremden Nummer ist, die historisch bei einem Benutzer eingeholt wird;
wenn es eine der fremden Nummer entsprechende Benutzer-Feedbackmarkierung nicht gibt, Markieren (407) der fremden Nummer mit einer Eigenschaftsmarkierung, die dem Anwendungstyp entspricht; und
wenn es eine der fremden Nummer entsprechende Benutzer-Feedbackmarkierung gibt, Markieren (408) der fremden Nummer mit der Benutzer-Feedbackmarkierung oder der Eigenschaftsmarkierung, die dem Anwendungstyp entspricht;
wobei die Eigenschaftsmarkierung zum Markieren eines Benutzertyps der fremden Nummer ist;
**dadurch gekennzeichnet, dass** das Markieren der fremden Nummer mit der Benutzer-Feedbackmarkierung oder der Eigenschaftsmarkierung, die dem Anwendungstyp entspricht, Folgendes aufweist:
Erkennen, ob die Eigenschaftsmarkierung mit der Benutzer-Feedbackmarkierung identisch ist;
wenn die Eigenschaftsmarkierung von der Benutzer-Feedbackmarkierung verschieden ist, Erfassen einer zuletzt empfangenen Benutzer-Feedbackmarkierung und Erkennen, ob eine Zeitspanne zwischen einer Generierungszeit der Benutzer-Feedbackmarkierung und einer aktuellen Zeit länger als eine vorbestimmte Zeitspanne ist; und,
wenn die Zeitspanne zwischen der Generierungszeit und der aktuellen Zeit länger als die vorbestimmte Zeitspanne ist, Markieren der fremden Nummer mit der Eigenschaftsmarkierung.

2. Verfahren nach Anspruch 1, das ferner Folgendes aufweist:
wenn die Zeitspanne zwischen der Generierungszeit und der aktuellen Zeit kürzer als die vorbestimmte Zeitspanne ist, Zählen einer ersten Empfangsnummer der Benutzer-Feedbackmarkierung und einer zweiten Empfangsnummer der Eigenschaftsmarkierung innerhalb einer vorbestimmten Zeitspanne;
wenn eine Differenz zwischen der zweiten Empfangsnummer und der ersten Empfangsnummer größer als eine vorbestimmte Schwelle ist, Markieren der fremden Nummer mit der Eigenschaftsmarkierung; und
wenn eine Differenz zwischen der zweiten Empfangsnummer und der ersten Empfangsnummer kleiner oder gleich der vorbestimmten Schwelle ist, Markieren der fremden Nummer mit der Benutzer-Feedbackmarkierung.

3. Verfahren nach einem der Ansprüche 1 oder 2, das ferner Folgendes aufweist:
wenn das anrufende Endgerät ein der fremden Nummer entsprechendes angerufenes Endgerät anruft, Senden des Anwendungstyps an das angerufene Endgerät, wobei das angerufene Endgerät zum Anzeigen des Anwendungstyps konfiguriert ist.

4. Vorrichtung zum Markieren einer Nummer, wobei die Vorrichtung Folgendes aufweist:
ein Informationsempfangsmodul (510, 610), das zum Empfangen einer von einem anrufenden Endgerät gesendeten fremden Nummer konfiguriert ist, wobei die fremde Nummer eine einem Benutzer von einer Dienstanwendung bereitgestellte Telefonnummer ist und das anrufende Endgerät eine Telefonanwendung durch die Dienstanwendung zum Anrufen der fremden Nummer aufruft;
wobei das Informationsempfangsmodul (510, 610) zum Empfangen einer Anwendungsidentifizierung der Dienstanwendung konfiguriert ist;
wobei die Vorrichtung ferner Folgendes aufweist:
ein Typerfassungsmodul (520, 620), das zum Erfassen eines der Dienstanwendung entsprechenden Anwendungstyps gemäß der durch das Informationsempfangsmodul empfangenen Anwendungsidentifizierung konfiguriert ist; und
ein Nummernmarkierungsmodul (530, 630), das zum Markieren der fremden Nummer gemäß dem durch das Typerfassungsmodul erfassten Anwendungstyp konfiguriert ist;
wobei der Anwendungstyp für den von der Anwendung bereitgestellten Dienst bezeichnend ist;
wobei Nummernmarkierungsmodul Folgendes aufweist:
ein Markierungsbeurteilungsuntermodul (631), das zum Urteilen, ob es eine der fremden Nummer entsprechende Benutzer-Feedbackmarkierung gibt, wobei die Benutzer-Feedbackmarkierung eine Feedbackmarkierung über einen Benutzertyp der fremden Nummer ist, die historisch bei einem Benutzer eingeholt wird;
ein erstes Markierungsuntermodul (632), das zum Markieren der fremden Nummer mit einer Eigenschaftsmarkierung, die dem Anwendungstyp entspricht, wenn das Markierungsbeurteilungsuntermodul urteilt, dass es eine der fremden Nummer entsprechende Benutzer-Feedbackmarkierung nicht gibt, konfiguriert ist; und
ein zweites Markierungsuntermodul (633), das zum Markieren der fremden Nummer mit der Benutzer-Feedbackmarkierung oder der Eigenschaftsmarkierung, die dem Anwendungstyp entspricht, wenn das Markierungsbeurteilungsuntermodul urteilt, dass es eine der fremden Nummer entsprechende Benutzer-Feedbackmarkierung gibt, konfiguriert ist;
wobei die Eigenschaftsmarkierung zum Markieren eines Benutzertyps der fremden Nummer ist;
**dadurch gekennzeichnet, dass** das zweite Markierungsuntermodul (633) ferner konfiguriert ist zum:
Erkennen, ob die Eigenschaftsmarkierung mit der Benutzer-Feedbackmarkierung identisch ist;
wenn die Eigenschaftsmarkierung von der Benutzer-Feedbackmarkierung verschieden ist, Erfassen einer zuletzt empfangenen Benutzer-Feedbackmarkierung und Erkennen, ob eine Zeitspanne zwischen einer Generierungszeit der Benutzer-Feedbackmarkierung und einer aktuellen Zeit länger als eine vorbestimmte Zeitspanne ist; und,
wenn die Zeitspanne zwischen der Generierungszeit und der aktuellen Zeit länger als die vorbestimmte Zeitspanne ist, Markieren der fremden Nummer mit der Eigenschaftsmarkierung.

5. Vorrichtung nach Anspruch 4, wobei das zweite Markierungsuntermodul (633) ferner konfiguriert ist zum:
wenn die Zeitspanne zwischen der Generierungszeit und der aktuellen Zeit kürzer als die vorbestimmte Zeitspanne ist, Zählen einer ersten Empfangsnummer der Benutzer-Feedbackmarkierung und einer zweiten Empfangsnummer der Eigenschaftsmarkierung innerhalb einer vorbestimmten Zeitspanne;
wenn eine Differenz zwischen der zweiten Empfangsnummer und der ersten Empfangsnummer größer als eine vorbestimmte Schwelle ist, Markieren der fremden Nummer mit der Eigenschaftsmarkierung; und
wenn eine Differenz zwischen der zweiten Empfangsnummer und der ersten Empfangsnummer kleiner oder gleich der vorbestimmten Schwelle ist, Markieren der fremden Nummer mit der Benutzer-Feedbackmarkierung.

6. Computerprogramm, das Anweisungen aufweist, die bei Ausführung des Programms in einem Computer den Computer zum Durchführen des Verfahrens nach einem der Ansprüche 1 bis 3 veranlasst.

7. System, das einen Server und ein Endgerät aufweist, wobei das Endgerät zum Senden einer fremden Nummer an den Server konfiguriert ist und der Server zum Durchführen des Verfahrens nach einem der Ansprüche 1 bis 3 konfiguriert ist.

## Revendications

1. Procédé pour étiqueter un numéro, le procédé comprenant, à un serveur :
recevoir un numéro non familier envoyé d'un terminal appelant, le numéro non familier étant un numéro de téléphone fourni à un utilisateur par une application de service, et le terminal appelant invoquant une application téléphonique par l'application de service pour appeler le numéro non familier ;
où le procédé comprend en outre :
recevoir (101) une identification d'application de l'application de service ;
acquérir (102) un type d'application correspondant à l'application de service conformément à l'identification d'application ; et
étiqueter (103) le numéro non familier conformément au type d'application ;
où le type d'application est indicatif du service fourni par l'application ;
où étiqueter (103) le numéro non familier conformément au type d'application comprend :
juger (406) si une étiquette de réaction utilisateur correspondant au numéro non familier existe, l'étiquette de réaction utilisateur étant une étiquette de réaction concernant un type d'utilisateur du numéro non familier qui est historiquement recueillie d'un utilisateur ;
lorsqu'une étiquette de réaction utilisateur correspondant au numéro non familier n'existe pas, étiqueter (407) le numéro non familier avec une étiquette de propriété correspondant au type d'application ; et
lorsqu'une étiquette de réaction utilisateur correspondant au numéro non familier existe, étiqueter (408) le numéro non familier avec l'étiquette de réaction utilisateur ou l'étiquette de propriété correspondant au type d'application ;
où l'étiquette de propriété est destinée à étiqueter un type d'utilisateur du numéro non familier ;
**caractérisé en ce que** étiqueter le numéro non familier avec l'étiquette de réaction utilisateur ou l'étiquette de propriété correspondant au type d'application comprend :
détecter si l'étiquette de propriété est identique à l'étiquette de réaction utilisateur ;
lorsque l'étiquette de propriété est différente de l'étiquette de réaction utilisateur, acquérir une étiquette de réaction utilisateur reçue le plus récemment, et détecter si une durée de temps entre une heure de génération de l'étiquette de réaction utilisateur et une heure courante est plus longue qu'une durée de temps prédéterminée ; et
lorsque la durée de temps entre l'heure de génération et l'heure courante est plus longue que la durée de temps prédéterminée, étiqueter le numéro non familier avec l'étiquette de propriété.

2. Procédé selon la revendication 1, comprenant en outre :
lorsque la durée de temps entre l'heure de génération et l'heure courante est plus courte que la durée de temps prédéterminée, compter un premier nombre de réception de l'étiquette de réaction utilisateur et un deuxième nombre de réception de l'étiquette de propriété dans une période de temps prédéterminée ;
lorsqu'une différence entre le deuxième nombre de réception et le premier nombre de réception est plus grande qu'un seuil prédéterminé, étiqueter le numéro non familier avec l'étiquette de propriété ; et
lorsqu'une différence entre le deuxième nombre de réception et le premier nombre de réception est plus petite que ou égale au seuil prédéterminé, étiqueter le numéro non familier avec l'étiquette de réaction utilisateur.

3. Procédé selon l'une quelconque des revendications 1 ou 2, comprenant en outre :
lorsque le terminal appelant appelle un terminal appelé correspondant au numéro non familier, envoyer le type d'application au terminal appelé, où le terminal appelé est configuré pour afficher le type d'application.

4. Dispositif pour étiqueter un numéro, le dispositif comprenant :
un module de réception d'informations (510, 610) configuré à un numéro non familier envoyé d'un terminal appelant, le numéro non familier étant un numéro de téléphone fourni à un utilisateur par une application de service, et le terminal appelant invoquant une application téléphonique par l'application de service pour appeler le numéro non familier ;
où le module de réception d'informations (510, 610) est configuré pour recevoir une identification d'application de l'application de service ;
le dispositif comprenant en outre :
un module d'acquisition de type (520, 620) configuré pour acquérir un type d'application correspondant à l'application de service conformément à l'identification d'application reçue par le module de réception d'informations ; et
un module d'étiquetage de numéro (530, 630) configuré pour étiqueter le numéro non familier conformément au type d'application acquis par le module d'acquisition de type;
où le type d'application est indicatif du service fourni par l'application ;
où le module d'étiquetage de numéro comprend :
un sous-module de jugement d'étiquette (631) configuré pour juger si une étiquette de réaction utilisateur correspondant au numéro non familier existe, l'étiquette de réaction utilisateur étant une étiquette de réaction concernant un type d'utilisateur du numéro non familier qui est recueillie historiquement d'un utilisateur ;
un premier sous-module d'étiquetage (632) configuré pour, lorsque le sous-module de jugement d'étiquette juge qu'une étiquette de réaction utilisateur correspondant au numéro non familier n'existe pas, étiqueter le numéro non familier avec une étiquette de propriété correspondant au type d'application ; et
un deuxième sous-module d'étiquetage (633) configuré pour, lorsque le sous-module de jugement d'étiquette juge qu'une étiquette de réaction utilisateur correspondant au numéro non familier existe, étiqueter le numéro non familier avec l'étiquette de réaction utilisateur ou l'étiquette de propriété correspondant au type d'application ;
où l'étiquette de propriété est destinée à étiqueter un type d'utilisateur du numéro non familier ; et
**caractérisé en ce que** le deuxième sous-module d'étiquetage (633) est configuré en outre pour :
détecter si l'étiquette de propriété est identique à l'étiquette de réaction utilisateur ;
lorsque l'étiquette de propriété est différente de l'étiquette de réaction utilisateur, acquérir une étiquette de réaction utilisateur reçue le plus récemment, et détecter si une durée de temps entre une heure de génération de l'étiquette de réaction utilisateur et une heure courante est plus longue qu'une durée de temps prédéterminée ; et
lorsque la durée de temps entre l'heure de génération et l'heure courante est plus longue que la durée de temps prédéterminée, étiqueter le numéro non familier avec l'étiquette de propriété.

5. Dispositif selon la revendication 4, dans lequel le deuxième sous-module d'étiquetage (633) est configuré en outre pour :
lorsque la durée de temps entre l'heure de génération et l'heure courante est plus courte que la durée de temps prédéterminée, compter un premier nombre de réception de l'étiquette de réaction utilisateur et un deuxième nombre de réception de l'étiquette de propriété dans une période de temps prédéterminée ;
lorsqu'une différence entre le deuxième nombre de réception et le premier nombre de réception est plus grande qu'un seuil prédéterminé, étiqueter le numéro étrange avec l'étiquette de propriété ; et
lorsqu'une différence entre le deuxième nombre de réception et le premier nombre de réception est plus petite que ou égale au seuil prédéterminé, étiqueter le numéro étrange avec l'étiquette de réaction utilisateur.

6. Programme informatique comprenant des instructions qui, lorsque le programme est exécuté sur un ordinateur, font que l'ordinateur mette en œuvre le procédé selon l'une quelconque des revendications 1 à 3.

7. Système comprenant un serveur et un terminal, dans lequel le terminal est configuré pour envoyer un numéro non familier au serveur et le serveur est configuré pour effectuer le procédé selon l'une quelconque des revendications 1 à 3.
